# EUROPEAN PATENT APPLICATION

(11) **EP 3 400 849 A1**
(43) Date of publication of application: **14.11.2018**
(21) Application number: 17735975.9
(22) Date of filing: 05.01.2017
(51) Int. Cl.: A47G 29/00, F16B 47/00

(54) **WALLPAPER ARTICLE SUPPORTING TOOL AND ANCHOR SHEET FOR ATTACHING ARTICLE**

(30) Priority: 08.01.2016 JP 2016002901
(71) Applicant: Nitoms, Inc., Tokyo 1400002 (JP)
(72) Inventor: TERADA, Itsumi, Tokyo 140-0002 (JP); TEZUKA, Hiroto, Tokyo 140-0002 (JP); HATTORI, Wakako, Tokyo 140-0002 (JP)
(74) Representative: EIP
(86) International application number: PCT/JP2017/000107
(87) International publication number: WO 2017/119438

(57) **Abstract**

(Problem) To provide an article support for wallpaper that is capable of being adhered to wallpaper having an uneven surface and capable of being easily removed therefrom without damaging the wallpaper. (Solution) Provided is an article support for wallpaper for fixing a base plate 1, to which a hook H can be attached, via an anchor sheet 2 to wallpaper W having an uneven surface, in which the anchor sheet 2 is formed by a substrate 21 and a pressure sensitive adhesive layer 22 provided on the back side of the substrate 21, and the substrate 21 is made of Japanese paper that can follow the uneven surface of the wallpaper W.

## Description

### FIELD OF THE INVENTION

The present invention relates to an article support for wallpaper , and an anchor sheet for attaching an article, which are capable of adhering to wallpaper having an uneven surface, and more specifically, to an article support for wallpaper and an anchor sheet for attaching an article, which are capable of supporting an article having a certain weight such as a metal hook, and being removed from wallpaper without damaging wallpaper.

### BACKGROUND ART

When an article such as a hook is to be attached to a wall surface, it is adhered thereto via double-sided adhesive tape or the like, or attached thereto via a fastener, such as nail and screw, in general.

However, there are many cases where wallpaper is adhered to a wall surface in a modern house from the view points of protecting a wall substrate and an ornamental perspective. Therefore, a hook or the like attached to the wall surface via adhesive tape has a problem of causing the wallpaper to be peeled off along with an adhesive face of the adhesive tape when removing the hook or the like, and damaging not only the wallpaper but also a wall surface in some cases.

In these days, majority of wallpaper commonly spread is made of vinyl chloride and has an uneven surface. Therefore, when an attempt is made to fix a stopper such as a hook to wallpaper via double-sided adhesive tape, a stable fixing state cannot be maintained because an adhesive face of the double-sided adhesive tape contacts only topmost portions of the wallpaper.

In particular, a hook having a certain weight such as a metal hook falls off in a moment and is therefore almost impossible to be attached to the wallpaper.

Meanwhile, according to a technique of attaching a stopper such as a hook to a wall surface via a nail or screw, the stopper can be surely attached thereto regardless of whether the surface is flat or uneven; however, there is a problem that a hole caused by a nail or screw remains not only in wallpaper but also in a wall surface, and hence damaging the wall surface in a similar manner to the case where the double-sided adhesive tape is used.

Therefore, in the recent years, there has been proposed adhesive tape using water-swellable pressure-sensitive adhesive as pressure sensitive tape that can fix an article to an uneven wall surface and that can be repeatedly detached without damaging the wall surface (see Patent Literature 1 below).

The pressure sensitive tape, in which its substrate is made of a water permeable material and has an interlaminar fracture strength being lower than the adhesive strength of the pressure sensitive adhesive, makes it possible to detach an article from the wall surface without damaging it by spraying of water onto the fractured substrate when the adhesive tape is peeled off from the wall surface, and thereby causing water to infiltrate water-swellable pressure-sensitive adhesive and swell the same to reduce an adhesive strength.

However, the pressure sensitive adhesive tape using this water-swellable pressure-sensitive adhesive has a problem that, when it is stored under high humidity conditions, its adhesive strength is lowered, and it cannot hold articles other than light-weight articles such as a poster due to the weak adhesive strength.

As described in Patent Literature 2 below, there is an adhesive tape using foamed resin having a restoring force such as acryl and urethane; however, there is a concern that its adhesive strength may be lowered under high humidity conditions in the same manner as in Patent Literature 1 below because a water-soluble acrylic resin is applied to its pressure-sensitive adhesive.

### CITATION LIST

### Patent Literature

Patent Literature 1: JP 2011-100688 A
Patent Literature 2: JP 2009-120742 A

### SUMMARY

### Technical Problem

In view of the above, an object of the present invention is to provide an article support for wallpaper that is capable of being adhered to wallpaper having an uneven surface, capable of being easily removed therefrom without damaging the wall surface when detached, and capable of surely supporting an article having a certain weight such as a metal hook.

### Solution to Problem

In order to overcome the above-mentioned problem, the first invention according to the present application includes: an anchor sheet that is peelably adhered to wallpaper having an uneven surface; and a base plate that allows an article such as a hook to be attached to the surface thereof, and being configured to fix the base plate via the anchor sheet to the wallpaper, wherein the base plate includes an adhesive means provided on a back side thereof, the adhesive means being configured to be adhered to the anchor sheet, wherein the anchor sheet includes a substrate and a pressure sensitive adhesive layer formed on one side of the substrate, wherein the pressure sensitive adhesive layer includes re-peelable pressure sensitive adhesive having such an adhesive strength that does not destroy the wallpaper when the anchor sheet is removed from the wallpaper, and wherein the substrate is made of a fiber raw material that can follow the uneven surface of the wallpaper.

As a preferable embodiment of the first invention according to the present application, the substrate may be made of Japanese paper, of which a raw material is plant fiber.

It is preferable that the pressure sensitive adhesive of the above pressure sensitive adhesive layer is acrylic pressure sensitive adhesive and a thickness of the pressure sensitive adhesive layer is 10 to 20 µm.

It is preferable that the adhesive means in the first invention is configured to have an adhesive strength of 3 N/20 mm or more relative to the substrate, and the adhesive means is a double-sided pressure sensitive adhesive tape.

The base plate in the first invention according to the present application is preferably made of a material that does not cause deformation such as deflection when the article is attached, is formed of, for example, a resin sheet, wood, or metal, and is printed with a pattern, color, or the like.

The second invention according to the present application is an anchor sheet for attaching an article such as a hook wallpaper having an uneven surface via a certain adhesive means, wherein the anchor sheet is adhered to the wallpaper at a position at which the article is to be attached, and is interposed between the article and the wallpaper, wherein the anchor sheet includes a substrate and a pressure sensitive adhesive layer formed on one side of the substrate, wherein the pressure sensitive adhesive layer includes re-peelable pressure sensitive adhesive having such an adhesive strength that does not destroy the wallpaper when the anchor sheet is removed from the wallpaper, and wherein the substrate is made of a fiber raw material that can follow the uneven surface of the wallpaper.

As the preferable embodiment of the second invention according to the present application, the substrate may be made of Japanese paper, of which a raw material is plant fiber.

### Effect of Invention

According to the first invention, the substrate of anchor sheet to be adhered to the wallpaper is formed of a paper material such as Japanese paper having a fine uneven surface, of which a fiber raw material is long so that the substrate can contact while following the uneven surface of the wallpaper to thereby ensure a sufficient adhered area relative to the wallpaper. Therefore, it is possible to surely hold an article such as a hook on the wallpaper having an uneven surface, which was conventionally difficult to achieve.

When the pressure sensitive adhesive layer of the anchor sheet is, for example, acrylic pressure sensitive adhesive that is re-peelable, freely deformable, and expands the range of choices for an adherend, the anchor sheet can be easily removed from the wallpaper without adhesive remaining on the surface of the wallpaper when peeled off therefrom.

When the adhesive means such as a double-sided pressure sensitive tape to be adhered between the base plate and the anchor sheet has an adhesive strength of 3 N/20 mm or more relative to the substrate, the base plate can stably fix an article thereto without being peeled off from the anchor sheet even in a case where a relatively heavy article is attached to the base plate.

Moreover, when the base plate is formed of a material that does not cause deformation such as deflection even in a case where an article having some weight is attached to the base plate, the base plate can be securely adhered to the anchor sheet to thereby stably support the article.

In this case, it is possible to impart decorativeness to the base plate as an interior ornament by printing the base plate with a pattern, color, or the like.

According to the second invention, when an article such as a hook is attached via an adhesive means such as a double-sided pressure sensitive adhesive tape to wallpaper having an uneven surface, the anchor sheet formed of a paper material such as Japanese paper having a fine uneven surface, of which a fiber raw material is long, is interposed between the wallpaper and the double-sided pressure sensitive adhesive tape. Therefore, it is possible to surely hold the article such as a hook to the wallpaper having an uneven surface, which was conventionally difficult to achieve.

### BRIEF DESCRIPTION OF THE DRAWINGS

Fig. 1 is a perspective view schematically showing an article support for wallpaper in exploded form according to an embodiment.
Fig. 2 is a sectional view schematically showing an article support for wallpaper in exploded form according to the embodiment.
Fig. 3 is a sectional view showing an article support for wallpaper in enlarged form according to the embodiment in the state where it is attached to a wall surface.

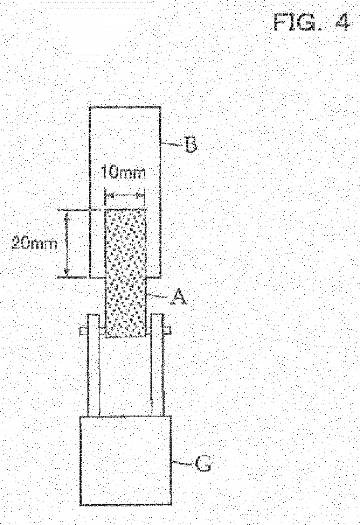

Fig. 4 is an explanatory diagram schematically showing test samples used in a test for adhesion (cohesion) of a pressure sensitive adhesive tape in the embodiment.
Fig. 5 is a graph showing a surface shape of a substrate used in Example 1.

### DESCRIPTION OF EMBODIMENTS

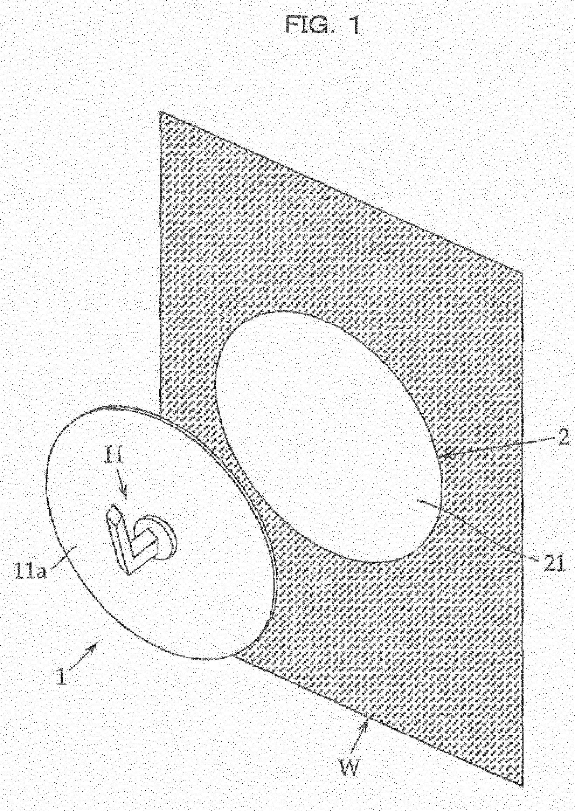

Next, an embodiment of the present invention will be described with reference to Fig. 1 to Fig. 3; however, the present invention is not particularly limited to the embodiment.

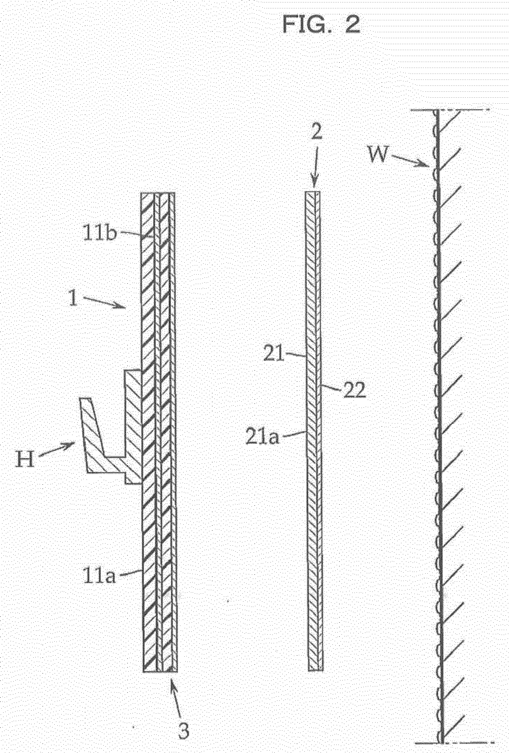

As shown in Fig. 1 and Fig. 2, an article support for wallpaper according to the present invention includes a base plate 1, to which a locking device H such as a hook is attached, and an anchor sheet 2 that is re-peelably adhered to wallpaper W.

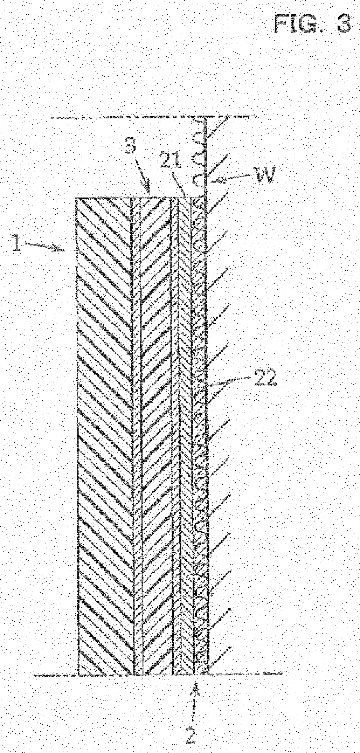

The article support for wallpaper according to the present invention can be adhered to, for example, wallpaper being made of vinyl chloride and having an uneven surface, to which a conventional article support for wallpaper is difficult to be attached. Thus, the following description will be given by taking, for example, the wallpaper W having an uneven surface as shown in Fig. 2 and Fig. 3.

The base plate 1 has a surface 1a, to which the locking device H such as a hook can be attached, and an adhesive means 3 provided on the side of a back surface 1b to be capable of adhering to an anchor sheet 2.

The base plate 1 is made of a material that does not cause deformation such as deflection when the locking device H such as a hook is attached thereto, and is a transparent resin sheet made of polyethylene terephthalate (PET resin) in this embodiment.

The thickness of the base plate 1 in this embodiment is set to 0.5 mm to avoid deformation such as deflection and thereby act as a surface for the reason that the description is made by taking, for example, the case where the locking device H having a relatively heavy weight of 750 g is attached to the base plate 1. However, the thickness of the base plate 1 may be appropriately determined according to the weight of the article to be attached thereto.

Print such as a pattern or color may be applied to the back surface 1b side of the base plate 1, while not being illustrated in this embodiment, to thereby impart decorativeness as an interior ornament for decorating a wall surface.

The adhesive means 3 in this embodiment is configured to have an adhesive strength of, for example, 3 N/20 mm or more relative to a hereinafter described substrate 21 of the anchor sheet 2 to exert a high loading performance when adhered to the anchor sheet 2.

The adhesive means 3 may be configured such that a pressure sensitive adhesive layer is formed from pressure sensitive adhesive having the above adhesive strength on the back surface 1b side of the base plate 1. In this embodiment, for example, a double-sided adhesive tape formed by applying of rubber or acrylic pressure sensitive adhesive to both faces of a foamed olefin substrate is employed.

The anchor sheet 2 includes the substrate 21 and a pressure sensitive adhesive layer 22 formed on one surface of the substrate 21. The substrate 21 in this embodiment is composed of Japanese paper having a thickness of 0.07 mm.

The pressure sensitive adhesive layer 22 in the present invention is formed from removable pressure sensitive adhesive having such adhesive strength as to enable the anchor sheet 2 to be smoothly peeled off from the wallpaper W without causing cohesion failure to the pressure sensitive adhesive layer 22 when being detached from the wallpaper W.

As the pressure sensitive adhesive for forming the pressure sensitive adhesive layer 22, any adhesive may be employed as long as it has adhesive strength with the above peelability, but acrylic pressure sensitive adhesive is preferable in respect of costs, selectability of an adherend, thermostability and weather resistance. In this embodiment, acrylic pressure sensitive adhesive, of which base polymer is acrylic copolymer prepared by emulsion polymerization, is used.

Regardless of whether the coating is performed according to the emulsion coating or the hot melt coating, the thickness of the pressure sensitive adhesive layer 22 is preferably set from 10 to 50 µm in view of the coating workability, the peelability when peeled off, and the adhesion to the wallpaper W. The thickness in this embodiment is set to 15 µm.

Setting the thickness of the pressure sensitive adhesive layer 22 to 10 µm or less is not preferable because it resultingly has an excessively low adhesive strength so that it does not develop the adhesion. Further, setting the adhesive thickness to 50 µm or more is also not preferable because it resultingly has an excessively strong adhesive strength so that it may damage the wallpaper when peeled off.

Both of the base plate 1 and the anchor sheet 2 in this embodiment have a circular shape with the same diameter and have, for example, a circular shape with a diameter of 125 mm.

Here, the method for attaching the article support for wallpaper of this embodiment to the wallpaper W will be described. First, release paper (not illustrated) attached to the surface of the pressure sensitive adhesive layer 22 of the anchor sheet 2 is removed, and the anchor sheet 2 is attached to the wallpaper W.

Next, it is preferable to leave the anchor sheet 2 at least six hours or more in order to ensure the time for allowing the substrate 21 of the anchor sheet 2 to conform to the uneven surface of the wallpaper W (hereinafter, the properties of the substrate gradually conforming to the uneven surface of wallpaper W is referred to as the "followability" of the substrate to wallpaper W).

Then, the base plate 1 is adhered in overlapping relationship with the substrate 21 of the anchor sheet 2 via double-sided adhesive tape 3. In this case, the hook H may be attached to the base plate in advance, or may be attached after the base plate 1 is adhered to the anchor sheet 2.

The above-mentioned embodiment is described by taking, for example, the substrate 21 made of Japanese paper, of which a raw material is plant fiber; however, the substrate 21 is not limited to Japanese paper as long as it is capable of following the uneven surface of the wallpaper W. For example, paper material such as crape paper having a fine uneven surface resulting from the raw material fiber may be employed as the substrate of the present invention, while general coated paper (printing paper) having smooth surface characteristics is unsuitable.

The substrate 21 is not limited to paper material that is made of plant fiber as the raw material. For example, synthetic fibers with flexibility such as nylon and acrylic such that they are capable of following an uneven surface of the wallpaper W may be employed.

The base plate 1 and the anchor sheet 2 in this embodiment have a circular shape with a diameter of 125 mm but are not limited to this size and shape. An appropriate size and shape may be selected from, for example, a triangle shape, a rectangular shape, and a star shape.

The base plate 1 in this embodiment is made of PET resin but is not limited thereto. Other resin sheets such as a sheet made of ABS resin or PP resin may be employed as long as deformation is not caused when an article is attached. The base plate 1 may be made of wood and metal that does not cause deformation such as deflection.

The hook H in this embodiment is attached to substantially the center of the base plate 1 via double-sided adhesive tape in order to withstand the load applied to the hook H. The hook may be attached to any position of an ornament board if a light load is applied to the hook H.

The above-mentioned embodiment is described by taking, for example, the case where the locking member such as the hook H serves as the article to be attached to the base plate 1. The article to be attached to the base plate 1 of the present invention is not limited thereto and may be, for example, a thin film mirror, an accessories case, or a picture frame.

The present invention may be realized in such a form that, when the article such as a hook is attached to the uneven wallpaper W, the article is directly adhered to the anchor sheet 2 via an adhesive means such as double-sided adhesive tape without intermediating the base plate 1.

In this embodiment, the double-sided adhesive tape 12 is formed, for example, by applying of rubber or acrylic pressure sensitive adhesive to both sides of a foamed olefin substrate, but is not limited thereto. Any pressure sensitive adhesive may employed as long as it has adhesive strength of 3 N/20 mm or more relative to the substrate 21 of the anchor sheet 2, and a double-sided adhesive tape of an acrylic foam type and an adhesive with a substrate (bubble-containing layer) itself having an adhesive strength may be employed.

Hereinafter, the present invention will be described by way of specific examples but the present invention is not limited to the following examples at all.

As mentioned in the above prior art section, there is a problem that a conventional pressure sensitive adhesive tape, to which pressure sensitive adhesive having general re-peelablity is applied, has a weak adhesion to wallpaper having an uneven surface, and thus has difficulty in fixing a hook having even a relatively light weight to wallpaper for a long time.

Presently, Japanese paper, vinyl chloride sheet (PVC), biaxially oriented polypropylene film (OPP), polyethylene terephthalate (PET), and the like are used as the substrate, one side of which is coated with a pressure sensitive adhesive, while any pressure sensitive adhesive is employed for this whether they are rubber type or acrylic type.

The inventors of the present invention assumed that the adhesion to wallpaper having an uneven surface may largely result from not the adhesive but the substrate, and thus performed a test to find a difference of adhesion to wallpaper having the uneven surface according to the substrate (Example 1: test for measuring an adhesion according to the substrate).

### (Example 1: test for measuring an adhesion according to the substrate)

Sample strips A were formed respectively using Japanese paper (thickness: 0.07 mm), PVC (thickness: 0.07 mm), OPP (thickness: 0.04 mm), and PET (thickness: 0.025 mm) as substrates of the re-peelable pressure sensitive adhesive sheets, coated with re-peelable solvent acrylic pressure sensitive adhesive (BPS-6066 manufactured by TOYOCHEM CO., LTD.) to have a thickness of 15 µm. Each of the formed sample strips A was adhered to an adherend B (wallpaper (SD-06 manufactured by Asahipen Corporation)) so as to each have an adhered area of 10 mm × 20 mm, on which a roller having a weight of 2 kg was reciprocated once to thereby apply a load G (50 g) thereto, and left under 40 °C for 30 minutes, so that the time when each sample strip has peeled off from wallpaper was measured. This test was performed three times (test time: one day (1,440 minutes)). Average values resulting therefrom are shown below.

**[Table 1]**

| Substrate | Retention Time (min) |
|---|---|
| Japanese paper | 1005 |
| PVC | 44 |
| OPP | 410 |
| PET | 575 |

From this result, it was confirmed that the adhesion duration differs depending on the substrates even for the pressure sensitive sheets, to which the same pressure sensitive adhesive with the same thickness was coated. It was also confirmed that Japanese paper is excellent in the adhesion for the pressure sensitive adhesive sheet, to which pressure sensitive adhesive with a thickness of 15 µm was coated. Standard Japanese paper was selected in this test from those distributed in the market as a substrate for masking tape because the purpose of the test was to merely confirm the adhesion of each general substrate. PVC, OPP, and PET were also selected from those widely distributed in the market for the same reason.

The present inventors assumed that better adhesion of Japanese paper to wallpaper having an uneven surface may arise from that Japanese paper increases the adhered area between wallpaper and the pressure sensitive adhesive, and thus observed a surface view and a cross sectional view of wallpaper used as adherend to thereby obtain the following findings.

### (Evaluation of wallpaper substrate)

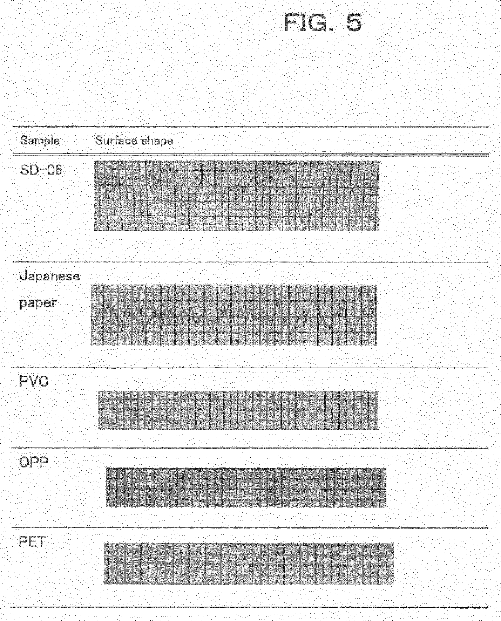

The wallpaper (SD-06 manufactured by Asahipen Corporation) had valleys and ridges arranged in a grid pattern with intervals between the ridges about 2 mm and a depth about 0.5 mm (see Fig. 5). It was assumed from this that the sample strips in Example 1 develop the adhesion by the pressure sensitive adhesive adhered to the ridges of the wallpaper, and therefore the following properties according to the substrates using the sample strips in Example 1 were confirmed.

### (Surface roughness of wallpaper and substrate)

It was assumed that the reason for better adhesion of, in particular, Japanese paper to the adherend such as wallpaper having an uneven surface lies in that Japanese paper gradually confirms to the uneven surface of wallpaper so as to cover the pressure sensitive adhesive adhered to wallpaper (hereinafter, the properties of Japanese paper gradually conforming to the uneven surface of wallpaper is referred to as the "followability" of Japanese paper to wallpaper). Then, the surface roughness of the ridges of wallpaper (SD-06 manufactured by Asahipen Corporation) used as the adherend in Example 1 and the surface roughness of each of the substrates used for sample strips were measured by a surface roughness measuring instrument (SE3500 manufactured by Kosaka Laboratory Ltd.; equipment conditions: wave length 0.8 mm, tip radius 2 µm, trace length 4.8 mm).

The results are shown below. The arithmetic mean roughness (Ra) is a value determined by sampling the reference length from the roughness curve in the direction of the mean line, and summing and averaging the absolute values of the deviations from the mean line to the measured references of the sampled sections. This is a mean value representing the unevenness of the target section. Peak height (Ry) represents the length between the bottommost portion and the topmost portion.

**[Table 2]**

| Sample | Arithmetic Mean Roughness (Ra) µm | Peak Height (Ry) µm | Unevenness Mean Interval (Sa) mm |
|---|---|---|---|
| Wallpaper (SD-06) | 13.59 | 57.0 | *** |
| Japanese paper | 5.95 | 23.2 | 0.30 |
| PVC | 0.21 | 1.10 | 0.22 |
| OPP | 0.11 | 1.09 | 0.50 |
| PET | 0.17 | 1.14 | 0.12 |

From this, it was found that the ridge portions of wallpaper have fine unevenness, and the surface of Japanese paper is much rougher than the other substrates.

### (Surface shape of wallpaper and substrates)

Next, the surface shapes of wallpaper and substrates are shown in Fig. 6 on the basis of the data obtained by the surface roughness measuring instrument (SE3500 manufactured by Kosaka Laboratory Ltd.; equipment conditions: wave length 0.8 mm, tip radius 2 µm, trace length 4.8 mm). It is found from this that Japanese paper has unevenness in a similar manner to the wallpaper (SD-06 manufactured by Asahipen Corporation). Contrary to this, the substrates such as PVC, OPP, and PET do not have such unevenness. It is assumed from this that Japanese paper has better adhesion to wallpaper because Japanese paper bites into the uneven surface of wallpaper, while the unevenness of Japanese paper is finer than that of wallpaper. It is also assumed that Japanese paper has better adhesion because it is produced by mixing of plants (paper mulberry and oriental paperbush) that are fiber raw material, which causes elongation of fiber raw material. Contrary to this, it is assumed that the substrates such as PVC, OPP, and PET have a smooth surface because they are produced through a stretching process.

### (Rigidity and elasticity of substrate)

Next, the present inventors assumed that a factor that Japanese paper develops the adhesion to wallpaper lies in the followability of Japanese paper to the uneven surface of wallpaper. In order to confirm the factor, they checked the rigidity and the elasticity of the substrates (pure bending tester KES FB2 manufactured by KATO TECH CO., LTD., equipment conditions: bending curvature 2.5 cm⁻¹ (0.4 - 2.5); sensitivity 4 (max); repeating time once; direction WARP; property calculation data (B1 = 0.5; B2 = 1.5; 2HB = 1.0).

The results are shown in Table 3 below.

**[Table 3]**

| Substrate | Substrate Thickness (mm) | Bending Rigidity (gf·cm²/cm) | Bending Elasticity (gf·cm/cm) |
|---|---|---|---|
| Japanese paper | 0.07 | 0.0868 | 0.0431 |
| PVC | 0.07 | 0.1465 | 0.1102 |
| OPP | 0.04 | 0.1385 | 0.0338 |
| PET | 0.025 | 0.0731 | 0.0088 |

Among the measurements this time, the bending rigidity correlates to the softness felt by human when he bends an article. The larger this value, the harder the feeling, while the smaller the value, the softer the feeling. The elasticity correlates to the elasticity felt by human when he bends an article and straightens it back. The larger this value, the worse the elasticity, while the smaller the value, the better the elasticity. From the results, the bending rigidities of all the substrates of PVC, OPP, and PET except for Japanese paper is harder as the thickness increases. Contrary to this, it is apparent that Japanese paper has softness close to PET despite the fact that it has a thickness larger than PET. Regarding the elasticity, it was found that the elasticity of PVC is very low, but it cannot be assumed that particularly Japanese paper is superior in elasticity. It was thus found that the elasticity of the substrate does not relate to the adhesion of the Japanese paper to wallpaper.

### (Study on adhesive thickness)

It was found in Example 1 that the substrate made of Japanese paper develops the highest degree of adhesion to wallpaper when the adhesive is set at 15 µm. Therefore, the test was conducted in the same manner as Example 1 by changing the adhesive thickness because it was assumed that the substrates other than Japanese paper may develop similar adhesion to wallpaper by changing the adhesive thickness.

The results thereof are shown in Table 4 below.

**[Table 4]**

| Adhesive Thickness (µm) | Substrate | Retention Time (min) | Retention Result |
|---|---|---|---|
| 15 | Japanese paper | 1005 | ○ |
| | PVC | 44 | × |
| | OPP | 410 | × |
| | PET | 575 | × |
| 25 | Japanese paper | 1345 | ○ |
| | PVC | 538 | × |
| | OPP | 1440 | ○ |
| | PET | 1440 | ○ |
| 35 | Japanese paper | 1440 | ○ |
| | PVC | 619 | × |
| | OPP | 1440 | ○ |
| | PET | 964 | × |

It is found from the above that the adhesion is improved by increasing of the adhesive thickness for OPP and PET that had low adhesion when the adhesive thickness is 15 µm. This may be because the adhesive strength increases by the increased thickness of the adhesive, which causes the adhesive to penetrate into the uneven surface of wallpaper. The adhesion of PVC did not increase even by the increased thickness. This may be mainly because the elasticity of PVC is lower than that of the other substrates. It appears that the lack of elasticity does not allow the substrate to be deformed even by application of the force thereto and thus does not provide the substrate with the followability to wallpaper.

### (Inspection results on the adhesion of the substrates to the wallpaper having an uneven surface)

It could be found from the above experiments and confirmation that the substrate made of Japanese paper has advantage in the adhesion to the wallpaper having an uneven surface among the re-peelable pressure sensitive adhesive sheets. It could be also confirmed that the adhesion of Japanese paper is much more excellent than the other adhesives in the case of the thin adhesive. In addition to the unevenness of the surface of Japanese paper caused by the plant fibers that are fiber raw material, it is assumed that this advantage in the adhesion lies in that Japanese paper is much softer than the other substrates, which allows itself to develop good followability to the adherend (wallpaper) to thereby ensure the adhered area. The increased adhesion of the materials, such as OPP and PET other than Japanese paper could be confirmed when the adhesive thickness is increased, but the advantage of Japanese paper may not change when taking into account the cost and environmental perspectives.

From the above, it could be seen that Japanese paper is preferable as the substrate of the anchor sheet in the case of the thin adhesive, while the other substrates (such as OPP and PET) can be used as the substrate when the adhesive thickness is increased.

In the present invention, it is important that the base plate 1 will not be peeled off from the anchor sheet 2 because the base plate 1, to which a stopper H such as a hook is attached, is used by being adhered in overlapping relation with the substrate 21 of the anchor sheet 2. Accordingly, the surface 21a of the substrate 21 is preferably not subjected to the back side treatment (release treatment).

However, a so-called pressure sensitive adhesive tape with a pressure sensitive adhesive layer having re-peelability, which is applied to the anchor sheet 2 of the present invention, is generally produced in a rolled form, and therefore, the surface 21a of the substrate 21 to be overlapped with the pressure sensitive adhesive layer is subjected to the back side treatment or is provided with release paper attached thereto.

The experiment below was thus performed to find such an adhesive strength that prevents the base plate 1 from being peeled off from the anchor sheet 2 in consideration of the fact that an adhesive strength obtainable for the substrate, which is not subjected to the back side treatment is not performed, is not obtainable when the substrate is subjected to the back side treatment (Example 2: adhesive strength between the base plate 1 and the anchor sheet 2).

### (Example 2: adhesive strength between the base plate 1 and the anchor sheet 2)

Comparison was made on the adhesive strength (adhesive strength on the back side) of the double-sided adhesive tape (double-sided adhesive tape No. 575 manufactured by Nitto Denko Corporation) having the same composition of the double-sided adhesive tape 12 of the base plate 1 relative to commercially available masking tapes, which have substrates made of different types of Japanese paper, which are subjected to different release treatments. Using the substrate surfaces of four masking tapes A, B, C, and D subjected to the different release treatments as adherends, the double-sided adhesive tape (double-sided adhesive tape No. 575 manufactured by Nitto Denko Corporation) was adhered to each of the adherends so as to have an adhered area of 10 mm × 20 mm, and a roller of 2 kg was reciprocated thereon once under the conditions of 23 °C so that an adhesive strength when they are removed by the tensile test device (RTC-1210A manufactured by ORIENTEC Co., LTD.) in the 180 degree direction with a tensile rate of 300 mm/min after the elapse of 20 minutes was measured. The results are shown in Table 5 below.

**[Table 5]**

| Masking Tape | Adhesive Strength (20mm/N) |
|---|---|
| A: No. 720A manufactured by Nitto Denko Corporation | 2.7 |
| B: No. 727 manufactured by Nitto Denko Corporation | 2.2 |
| C: No. 7286 manufactured by Nitto Denko Corporation | 3.1 |
| C: No. S2051 manufactured by Nitoms, Inc. | 3.0 |

### (Example 3: adhesive strength of the article support for wallpaper relative to wallpaper)

A sample was prepared by attaching of the hook H to the article support for wallpaper S configured as shown in Table 6 below, and being attached to wallpaper using the masking tapes, of which the adhesive strength was measured in Example 2, so as to confirm their adhesions.

**[Table 6]**

| Member | Size |
|---|---|
| Anchor sheet (masking tapes A, B, C, D) | 125 mm in diameter |
| Double-sided pressure sensitive tape (No. 575 manufactured by Nitto Denko Corporation) | 125 mm in diameter |
| Ornament board (PET: 1 mm) | 125 mm in diameter |
| Double-sided pressure sensitive tape (No. 575 manufactured by Nitto Denko Corporation) | 30 mm in diameter |
| Hook (750 g) | 30 mm in diameter |

In this Example, using wallpaper SD-06 manufactured by Asahipen Corporation is employed as an adherend C, the same masking tapes as Example 2 were adhered to the adherend C, on which a roller of 2 kg was reciprocated once under the conditions of 23 °C and left under the room temperature of 40 °C for 30 minutes, and then a hook of 750 g was attached thereto and held for one month.

This test was repeated five times, and it was found that double-sided pressure sensitive adhesive tapes with an adhesive strength of 3 N/mm or less fall off from the masking tapes.

**[Table 7]**

| Masking Tape | Adhesive Strength (20mm/N) | Adhesion Result |
|---|---|---|
| A: No. 720A manufactured by Nitto Denko Corporation | 2.7 | × |
| B: No. 727 manufactured by Nitto Denko Corporation | 2.2 | × |
| C: No. 7286 manufactured by Nitto Denko Corporation | 3.1 | ○ |
| C: No. S2051 manufactured by Nitoms, Inc. | 3.0 | ○ |

### (Inspection results on adhesion between the base plate and the anchor sheet)

It was found from Example 2 and Example 3 that the preferable adhesion of the anchor sheet 2 to the base plate 1 is such that an adhesive strength to the substrate surface 21 of the double-sided pressure sensitive tape 12 is 3 N/mm or more.

### (Example 4: Followability ensuring time of the anchor sheet to the wallpaper)

The test below was performed to confirm the time period for allowing the masking tame D to conform to the unevenness of wallpaper (SD-06 manufactured by Asahipen Corporation) (followability ensuring time). Using the wallpaper (SD-06 manufactured by Asahipen Corporation) as an adherend, the masking tape D was adhered to the adherend so as to have an adhered area of 15 mm × 15 mm, and a roller of 2 kg was reciprocated thereon once under the conditions of 23°C so that an adhesive strength when it is removed by the tensile tester (AGS-X manufactured by SHIMADZU CORPORATION) in the 180 degree direction with a tensile rate of 50mm/min after the elapse of the predetermined time was measured.

The results are shown in Table 8 below.

**[Table 8]**

| Elapsed Time (h) | Shear Adhesive Strength (N/15mm) |
|---|---|
| 0 | 52.5 |
| 1 | 51.1 |
| 2 | 52.2 |
| 3 | 49.7 |
| 4 | 47.6 |
| 5 | 47.1 |
| 6 | 62.2 |
| 7 | 61.5 |
| 8 | 60.7 |
| 9 | 58.9 |

It was found from this that it is preferable to leave the anchor sheet at least six hours or more in order to allow the anchor sheet to conform to the wallpaper and then maintain an appropriate adhesive strength.

It was found from the above-described Examples and the like that the substrate is the primary factor for enhancing the adhesion to wallpaper having an uneven surface. Further, it was found that the substrate follows an uneven surface of wallpaper because it has an uneven face.

It is known that paper material is made of fiber raw material and has an uneven surface. In particular, Japanese paper, of which fiber raw material is long, may be highly advantageous as a substrate.

### DESCRIPTION OF REFERENCE NUMBERS

1: Base plate
2: Anchor sheet
21: Substrate
22: Pressure sensitive adhesive layer
3: Adhesive means
W: Wallpaper
H: Hook

## Claims

1. An article support for wallpaper comprising:
an anchor sheet that is peelably adhered to wallpaper having an uneven surface; and a base plate that allows an article such as a hook to be attached to a surface thereof, and being configured to fix the base plate via the anchor sheet to the wallpaper,
wherein the base plate comprises an adhesive means provided on a back side thereof, the adhesive means being configured to be adhered to the anchor sheet,
wherein the anchor sheet comprises a substrate and a pressure sensitive adhesive layer formed on one side of the substrate,
wherein the pressure sensitive adhesive layer comprises re-peelable pressure sensitive adhesive having such an adhesive strength that does not destroy the wallpaper when the anchor sheet is removed from the wallpaper, and
wherein the substrate is made of fiber raw material that can follow the uneven surface of the wallpaper.

2. The article support for wallpaper according to claim 1, wherein the substrate comprises Japanese paper.

3. The article support for wallpaper according to claim 1 or 2, wherein the pressure sensitive adhesive of the pressure sensitive adhesive layer is acrylic pressure sensitive adhesive.

4. The article support for wallpaper according to any one of claims 1 to 3, wherein a thickness of the pressure sensitive adhesive layer is 10 to 20 µm.

5. The article support for wallpaper according to any one of claims 1 to 4, wherein the adhesive means has an adhesive strength of 3 N/20 mm or more relative to the substrate.

6. The article support for wallpaper according to any one of claims 1 to 5, wherein the adhesive means comprises a double-sided pressure sensitive adhesive tape.

7. The article support for wallpaper according to any one of claims 1 to 6, wherein the base plate is made of a material that does not cause deformation such as deflection when the article is attached.

8. The article support for wallpaper according to claim 7, wherein the base plate is formed of a resin sheet.

9. The article support for wallpaper according to claim 7, wherein the base plate is formed of wood.

10. The article support for wallpaper according to claim 7, wherein the base plate is formed of metal.

11. The article support for wallpaper according to any one of claims 1 to 10, wherein the base plate is printed with a pattern, color, or the like.

12. An anchor sheet for attaching an article such as a hook to wallpaper having an uneven surface via a certain adhesive means,
wherein the anchor sheet is adhered to the wallpaper at a position at which the article is to be attached, and is interposed between the article and the wallpaper,
wherein the anchor sheet comprises a substrate and a pressure sensitive adhesive layer formed on one side of the substrate,
wherein the pressure sensitive adhesive layer comprises re-peelable pressure sensitive adhesive having such an adhesive strength that does not destroy the wallpaper when the anchor sheet is removed from wallpaper, and
wherein the substrate is made of fiber raw material that can follow the uneven surface of the wallpaper.

13. The anchor sheet according to claim 12, wherein the substrate comprises Japanese paper.
